Europäisches Patentamt

European Patent Office

Office européen des brevets

(11) Veröffentlichungsnummer: **0 679 466 A1**

(12) **EUROPÄISCHE PATENTANMELDUNG**

(21) Anmeldenummer: **95103849.6**

(22) Anmeldetag: **16.03.95**

(51) Int. Cl.⁶: **B23D 73/08**, B21H 7/14

(30) Priorität: **29.04.94 DE 4415012**

(43) Veröffentlichungstag der Anmeldung:
**02.11.95 Patentblatt 95/44**

(84) Benannte Vertragsstaaten:
**CH DE ES FR IT LI PT SE**

(71) Anmelder: **Rüggeberg, August**
**Hauptstrasse 13**
**D-51709 Marienheide (DE)**

(72) Erfinder: **Abele, Jürgen**
**Waldweg 12**
**D-88718 Daisendorf (DE)**
Erfinder: **Ackerschott, Gerd, Dr.**
**Offenbachstrasse 7a**
**D-51643 Gummersbach (DE)**
Erfinder: **Becker, Bruno**

**Grosshöhfeld 6**
**D-51688 Wipperfürth (DE)**
Erfinder: **Hardenbicker, Hermann**
**Egerpohl 3**
**D-51688 Wipperfürth (DE)**
Erfinder: **Suhrheinrich, Rolf**
**Mossbergstrasse 7**
**D-51709 Marienheide (DE)**
Erfinder: **Rüggeberg, Tom**
**Lingerstrasse 11B**
**D-51709 Marienheide (DE)**

(74) Vertreter: **Rau, Manfred, Dr. Dipl.-Ing. et al**
**Rau, Schneck & Hübner**
**Patentanwälte**
**Königstrasse 2**
**D-90402 Nürnberg (DE)**

(54) **Verfahren zur Herstellung von Rundfeilen.**

(57) Zum Herstellen von Rundfeilen wird ein aus Feilen-Werkstoff bestehender Rundstab (2) kontinuierlich um seine Mittel-Längs-Achse (10) gedreht und kontinuierlich in Richtung der Achse (10) bewegt. Am Rundstab (2) wird eine gerade Zahl von schraubenlinienförmig zur Achse (10) verlaufenden einander jeweils benachbarten ersten und zweiten Feilzähnen dadurch erzeugt, daß auf den Rundstab (2) einander diametral gegenüberliegend angreifende Kaltumform-Kräfte in der Weise ausgeübt werden, daß auf einer Seite des Rundstabes (2) jeweils die Freifläche eines ersten Feilzahnes und die Spanfläche eines benachbarten zweiten Feilzahnes und auf der diametral gegenüberliegenden Seite des Rundstabes (2) die Spanfläche des ersten Feilzahnes und die Freifläche des benachbarten zweiten Feilzahnes ausgebildet werden.

FIG.1

EP 0 679 466 A1

Die Erfindung betrifft ein Verfahren mm Herstellen von Rundfeilen.

Es ist bekannt, Rundfeilen, wie sie beispielsweise mm Schärfen von Motorsägenketten eingesetzt werden, durch Kaltumformung mittels eines Meißels herzustellen, der auf dem sich unter ihm drehenden Rundstab Zähne mit einer Meißelhaugeschwindigkeit zwischen 1.000 und 12.000 Hieben pro Minute schlägt, wodurch eine rundum verzahnte Feile erzeugt wird.

Aus der DE-PS 604 611 ist es bekannt, zur Herstellung von doppelhiebigen Rund- oder Halbrundfeilen die Zähne mittels Hindurchwalzens des kalten Rundstabes zwischen bei Walzbacken zu pressen, von denen die eine ein Rechtsgewinde und die andere ein Linksgewinde der gewünschten Steigung erzeugt. Hiermit sind nur relativ kurze Rundfeilen erzeugbar. Die hiermit erzeugte Qualität der Feilenzähne ist nicht zufriedenstellend, so daß sich dieses Verfahren nicht durchgesetzt hat.

Der Erfindung liegt die Aufgabe zugrunde, ein Verfahren zur Herstellung von Rundfeilen zu schaffen, das eine kontinuierliche Fertigung mit hoher Geschwindigkeit und hoher Qualität der erzeugten Feilzähne gewährleistet.

Diese Aufgabe wird durch die im Patentanspruch 1 angegebenen Arbeitsschritte gelöst. Die erfindungsgemäße losung hat zur Folge, daß der Werkstoff des aus Vollmaterial oder Rohrmaterial bestehenden Rundstabes bei der Kaltumformung im Bereich der zu erzeugenden Schneiden frei fließen kann, da jeweils nur entweder von der Freifläche oder von der Spanfläche eines Feilzahnes her Verformungskräfte ausgeübt werden und der Werkstoff jeweils in Richtung der anderen Seite frei fließen kann.

Hierdurch werden scharfkantige Feilzähne erzeugt, die einen exakten Verlauf am Feilenumfang haben, so daß sie beim Einsatz Flächen mit geringer Oberflächenrauhigkeit erzeugen. Grundsätzlich können jeweils benachbarte Feilzähne unterschiedlicher Teilung erzeugt werden; vorteilhafterweise werden aber Feilzähne mit jeweils gleichbleibender Teilung erzeugt, wie es im Anspruch 2 angegeben ist. Der Spanwinkel der Feilzähne kann durch das erfindungsgemäße Verfahren sehr klein werden; er kann im Bereich zwischen 0 und -6° liegen.

Anspruch 3 gibt eine vorteilhafte konkrete Ausgestaltung des erfindungsgemäßen Arbeitsverfahrens wieder, wobei mit der einen Rolle ein Rohsteg erzeugt wird, der dann durch den Gewinderollsteg der anderen als Gegenrolle wirkenden Rolle geteilt wird. Das vorstehend angesprochene freie Fließen des Werkstoffes wird dadurch ermöglicht, daß die Form des jeweiligen Feilzahnes nicht vollständig in den Gewinderollstegen der Rolle bzw. Gegenrolle abgebildet ist.

Zweckmäßigerweise werden Rundstäbe aus gezogenem, geglühtem und geschliffenem Feilenwerkstoff eingesetzt, die entweder die Länge einer zu erzeugenden Feile aufweisen, oder eine größere Länge von mehreren Metern aufweisen. Die fertigen Feilen müssen dann noch gehärtet werden. Die absolut kontinuierliche Herstellung ermöglicht einen durchgehenden vollautomatisierbaren Fertigungsprozeß.

Weitere Merkmale, Vorteile und Einzelheiten der Erfindung ergeben sich aus der nachfolgenden Beschreibung eines Ausführungsbeispiels anhand der Zeichnung. Es zeigt

Fig. 1 eine Vorrichtung zur Erzeugung von gewindeförmig verlaufenden Feilenzähnen an einem Rundstab mit einer vorgeschalteten Vorrichtung zur Erzeugung von Spanbrechernuten,

Fig. 2 die Erzeugung eines Rohstegs am Rundstab mittels einer Rolle der Vorrichtung zur Erzeugung von Feilzähnen in einer Querschnittsdarstellung,

Fig. 3 die Teilung des Rohsteges mittels der anderen gegenüberliegenden Rolle der Vorrichtung zur Erzeugung von Feilzähnen, ebenfalls in Querschnittsdarstellung und

Fig. 4 die Erzeugung der Feilzähne in schematisierter Darstellung im Querschnitt.

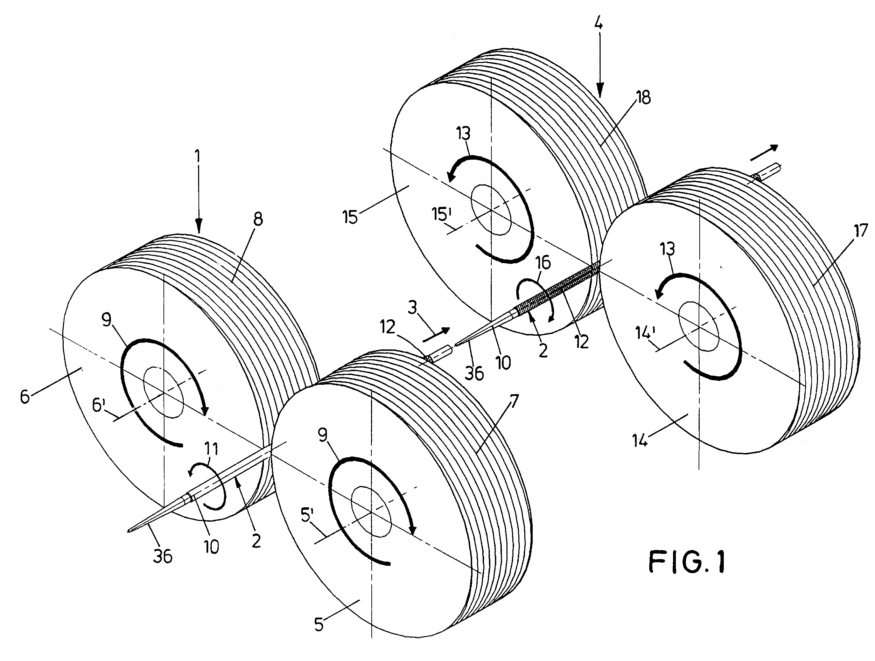

In Fig. 1 ist links eine Vorrichtung 1 zur Erzeugung von Spanbrechernuten auf einem Rundstab 2 dargestellt. In Arbeitsrichtung 3 ist dieser Vorrichtung 1 eine Vorrichtung 4 zur Erzeugung von Fellzähnen nachgeordnet.

Die Vorrichtung 1 weist zwei einander diametral gegenüberliegende im wesentlichen zylindrische Rollen 5, 6 auf, die auf ihrem Außenumfang mit schraubenlinienförmig, gegensinnig zueinander verlaufenden mehrgängigen Stegen 7, 8 versehen sind. Die Rollen 5, 6 sind mittels nicht dargestellter Antriebe bzw. eines Antriebs um ihre Achsen 5', 6' mit gleicher Umfangsgeschwindigkeit und gleichsinnig entsprechend dem Drehrichtungspfeil 9 antreibbar. Der an den einander unmittelbar gegenüberliegenden Stellen der Rollen 5, 6 anliegende, und von diesen radial zu seiner Mittel-Längs-Achse 10 mit Druckkräften beaufschlagte Rundstab 2 wird durch die Rollen 5, 6 entgegen dem Drehrichtungspfeil 9, also entsprechend dem Drehrichtungspfeil 11, gedreht. Bei dieser Abrollbewegung des Rundstabes 2 zwischen den Rollen 5, 6 wird auf diesem entsprechend dem Verlauf der Stege 7, 8 ein mehrgängiges Feingewinde 12 erzeugt, das bei der fertigen Feile die Funktion von Spanbrechernuten hat. Dieses Feingewinde 12 hat einen Verlauf, der dem Verlauf der zu erzeugenden gewindeartigen Feilzähne entgegengesetzt gerichtet ist. Die Achsen 5', 6' sind nicht exakt parallel zueinander, sondern geringfügig gegeneinander versetzt angeordnet, um den Vorschub des Rundstabes 2 in Arbeitsrichtung 3 zu erzeugen.

Die Vorrichtung 4 zur Erzeugung der Feilzähne weist ebenfalls zwei einander diametral gegenüberliegende, mittels eines nicht dargestellten Antriebs gleichsinnig entsprechend dem Drehrichtungspfeil 13 mit gleicher Unifangsgeschwindigkeit antreibbare, zylindrische Rollen 14, 15 auf. Die um ihre Achsen 14', 15' antreibbaren Rollen 14, 15 drehen den durch sie hindurchlaufenden Rundstab 2 gemäß dem Drehrichtungspfeil 16 entgegengesetzt zur Drehrichtung 13 der Rollen 14, 15. Die Achsen 14', 15' verlaufen zur Erzeugung eines Vorschubes des Rundstabes 2 in Arbeitsrichtung 3 gleichartig, wie vorstehend für die Achsen 5', 6' der Rollen 5, 6 beschrieben.

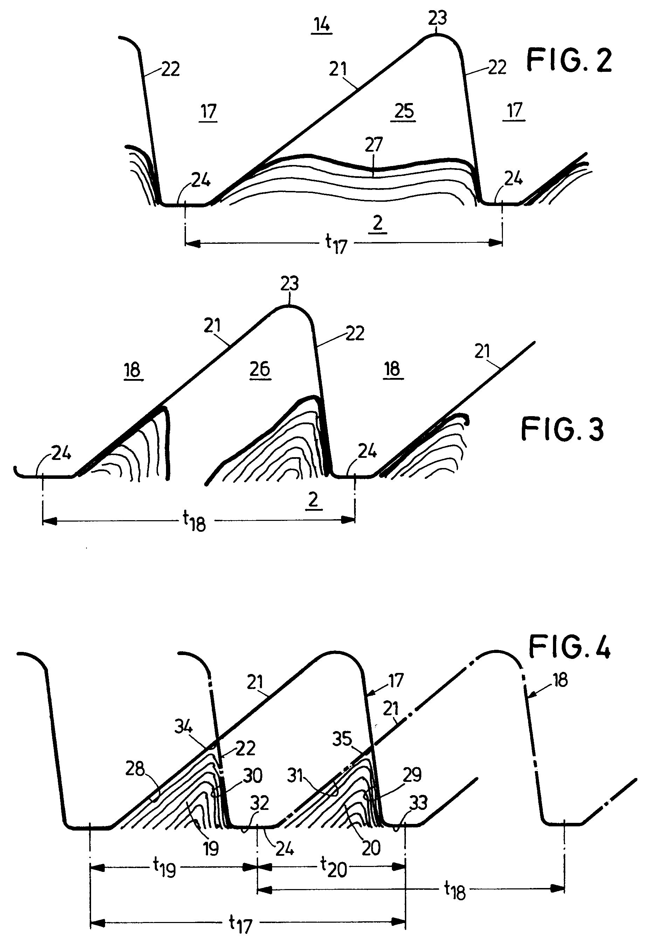

Die Rollen 14 bzw. 15 sind jeweils mit mehreren Gewinderollstegen 17 bzw. 18 konstanter Steigung versehen, die schraubenlinienförmig verlaufen und die wegen der - bezogen auf den Rundstab 2 - einander diametral gegenüberliegenden Anordnung bei gleicher Drehrichtung 13 gleichsinnig verlaufen. Der Querschnitt der Gewinderollstege 17 bzw. 18 ist einerseits in den Fig. 2 und 3 und andererseits in Fig. 4 dargestellt, wo ein Gewinderollsteg 17 und ein Gewinderollsteg 18 in eine Ebene projiziert sind. Die beiden Gewinderollstege 17, 18 der beiden Rollen 14, 15 sind im Querschnitt identisch. Sie haben eine Teilung $t_{17}$ bzw. $t_{18}$, die doppelt so groß ist wie die Teilung $t_{19}$ bzw. $t_{20}$ von zu erzeugenden gewindeartigen Feilzähnen 19, 20. Es gilt also $t_{17} = t_{18} = 2t_{19} = 2t_{20}$. Unter der Teilung t versteht man den Abstand zweier einander unmittelbar benachbarter Gewinderollstege 17 bzw. 18 bzw. zweier benachbarter Feilzähne 19 bzw. 20. Die Gewinderollstege 17, 18 weisen jeweils einen Stegrücken 21 und eine Stegbrust 22 auf, die am jeweiligen Ganggrund 23 abgerundet ineinander übergehen. Der auf den Rollen 14, 15 jeweils radial außen liegende Übergang zwischen einem Stegrücken 21 und einer Stegbrust 22 wird durch einen Stegumfang 24 gebildet, der abgerundet oder - wie in Fig. 2 - zylindrisch ausgebildet sein kann. Der Stegrücken 21 eines Gewinderollsteges 17, der sich anschließende Ganggrund 23 und die sich anschließende Stegbrust 22 begrenzen einen Gewinderollgang 25 zwischen den Gewinderollstegen 17 bzw. einen Gewinderollgang 26 zwischen den Gewinderollstegen 18.

Wie in Fig. 4 angedeutet ist, sind die Rollen 14, 15 der Vorrichtung 4 derart angeordnet, daß zwei Gewinderollstege 17 bzw. 18 um eine halbe Teilung $t_{17}$ bzw. $t_{18}$ gegeneinander versetzt an den zu erzeugenden Feilzähnen 19, 20 zum Eingriff kommen.

Beim Hindurchführen des Rundstabes 2 in Arbeitsrichtung 3 durch das Paar von Rollen 14, 15 unter entsprechendem Anpreßdruck der Rollen 14, 15 gegen den Rundstab 2 fließt - wie aus Fig. 2 hervorgeht - Werkstoff des Rundstabes 2 in den Gewinderollgang 25 der Rolle 14. Es fließt durch die Kaltumformung einerseits ausgehend vom Stegumfang 24 am Stegrücken 21 und andererseits von dem der Stegbrust 22 benachbarten Stegumfang 24 frei in den Gewinderollgang 25. Da es diesen nicht füllt, kann es völlig frei fließen. Es wird hierbei ein Rohsteg 27 gebildet, der eine Teilung $t_{17}$ hat. Dieser Rohsteg 27 weist bereits einen Teil einer Freifläche 28 eines Feilzahnes 19 und einen Teil einer Spanfläche 29 eines benachbarten Feilzahnes 20 auf.

Aufgrund des geschilderten Versatzes der Rolle 15 gegenüber der Rolle 14 um eine halbe Teilung $t_{18}$ greift der Stegumfang 24 des Gewinderollsteges 18 mittig in den Rohsteg 27 ein und teilt diesen, wobei der Werkstoff des Rundstabes 2 wiederum frei fließen kann, da die Freifläche 28 und die Spanfläche 29 hierbei freiliegen. Hierbei erzeugt die Stegbrust 22 des Gewinderollsteges 18 die Spanfläche 30 des Feilzahnes 19 und der Stegrücken 21 die Freifläche 31 des Feilzahns 20. Dieser Kaltumformungsvorgang wiederholt sich entsprechend der Zahl der Gewinderollstege 17 bzw. 18 auf den Rollen 14, 15, wobei jeweils abwechselnd Freiflächen 28 und Spanflächen 29 bzw. Spanflächen 30 und Freiflächen 31 mit Verformungskraft beaufschlagt werden, während Spanflächen 30 und Freiflächen 31 bzw. Freiflächen 28 und Spanflächen 29 jeweils freiliegen. Durch den Stegumfang 24 der Gewinderollstege 17 bzw. 18 werden der jeweilige Zahngrund 32 bzw. 33 geformt. Dadurch daß das Material des Rundstabes 2 jeweils frei fließen kann, erhalten die Feilzähne 19, 20 jeweils scharfkantige Schneiden 34, 35 am äußeren Übergang der Spanfläche 30 zur Freifläche 28 bzw. am Übergang der Spanfläche 29 zur Freifläche 31. Das Feingewinde 12 bleibt hierbei zumindest weitgehend erhalten und bildet Spanbrechernuten in den Schneiden 34, 35 der Feilzähne 19, 20. Trotz dieser Spanbrechernuten, die in der Zeichnung selber nicht dargestellt sind, sind die Schneiden 34, 35 glatt und haben in ihrem Gesamtumfang den Umfang eines Kreiszylinders, so daß mit ihnen sehr sauber, d.h. mit geringer Rauhigkeitstiefe gefeilt werden kann.

Wie Fig. 1 entnehmbar ist, können hintereinander einzelne Rundstäbe 2 mit Fellzähnen 19, 20 versehen werden, wobei die einzelnen Rundstäbe 2 mit einem verjüngten Endstück 36 versehen sind, das zum Einsetzen in einen Handgriff dient. Dieses Endstück 36 ist nicht mit Feilzähnen versehen. Andererseits können aber auch Rundstäbe von mehreren Metern Länge fortlaufend mit Feilzähnen versehen werden.

Die Zahl der schraubenlinienförmig verlaufenden Feilzähne 19, 20 kann gerade oder ungerade sein. Wenn jede Rolle 14 bzw. 15 mit einer Zahl n von Gewinderollstegen 17 bzw. 18 versehen ist, dann entspricht die Zahl m der schraubenlinienförmig verlaufenden Feilzähne 19 bzw. 20 einem Vielfachen der Zahl n. Die Zahl n von Gewinderollstegen 17 bzw. 18 liegt üblicherweise zwischen 8 und 15.

**Patentansprüche**

1. Verfahren zum Herstellen von Rundfeilen aus einem aus Feilen-Werkstoff bestehenden Rundstab (2), der eine Mittel-Längs-Achse (10) aufweist, mit folgenden Arbeitsschritten:
Ein Rundstab (2) wird kontinuierlich um seine Mittel-längs-Achse (10) gedreht und kontinuierlich in Richtung der Achse (10) bewegt. Am Rundstab (2) wird eine gerade Zahl von schraubenlinienförmig zur Achse (10) verlaufenden einander jeweils benachbarten ersten und zweiten Feilzähnen (19, 20) dadurch erzeugt daß auf den Rundstab (2) einander diametral gegenüberliegend angreifende Kaltumform-Kräfte in der Weise ausgeübt werden, daß auf einer Seite des Rundstabes (2) jeweils die Freifläche (28) eines ersten Feilzahnes (19) und die Spanfläche (29) eines benachbarten zweiten Feilzahnes (20) und auf der diametral gegenüberliegenden Seite des Rundstabes (2) die Spanfläche (30) des ersten Feilzahnes (19) und die Freifläche (31) des benachbarten zweiten Feilzahnes (20) ausgebildet werden.

2. Verfahren nach Anspruch 1, wobei die Teilung ($t_{19}$) der ersten Feilzähne (19) identisch der Teilung ($t_{20}$) der zweiten Feilzähne (20) ist.

3. Verfahren nach Anspruch 1 oder 2, wobei zur Erzeugung der Kaltumform-Kräfte zwei einander diametral gegenüberliegende, den Rundstab (2) zwischen sich führende Rollen (14, 15) eingesetzt werden, die auf ihrem Umfang mit Gewinderollstegen (17, 18) mit stetiger Steigung versehen sind, deren Teilung ($t_{17}$, $t_{18}$) gleich der Summe der Teilung ($t_{19}$) zwischen einem ersten Feilzahn (19) und einem unmittelbar benachbarten zweiten Feilzahn (20) und der Teilung ($t_{20}$) zwischen einem zweiten Feilzahn (20) und einem unmittelbar benachbarten ersten Feilzahnes (19) ist, wobei die Gewinderollstege (17, 18) der beiden Rollen (14, 15) in Richtung der Achse (10) um einen Bruchteil ihrer Teilung ($t_{17}$, $t_{18}$) versetzt sind.

4. Verfahren nach Anspruch 3, dadurch gekennzeichnet, daß die Gewinderollstege (17, 18) der einander diametral gegenüberliegenden Rollen (14, 15) um eine halbe Teilung ($t_{17}$, $t_{18}$) der Gewinderollstege (17, 18) gegeneinander versetzt sind.

5. Verfahren nach einem der Ansprüche 1 bis 4, dadurch gekennzeichnet, daß ein aus Feilen-Werkstoff bestehender gezogener, geglühter und geschliffener Rundstab (2) eingesetzt wird.

6. Verfahren nach einem der Ansprüche 1 bis 5, dadurch gekennzeichnet, daß ein Rundstab (2) aus Vollmaterial eingesetzt wird.

7. Verfahren nach einem der Ansprüche 1 bis 5, dadurch gekennzeichnet, daß ein Rundstab aus Rohrmaterial eingesetzt wird.

FIG.1

FIG. 2

FIG. 3

FIG. 4

| | Europäisches Patentamt | EUROPÄISCHER RECHERCHENBERICHT | Nummer der Anmeldung EP 95 10 3849 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | DE-C-604 611 (NAGEL) <br> * Seite 2, Zeile 84 - Seite 3, Zeile 28; Abbildungen 6-10 * <br> --- | 1 | B23D73/08 <br> B21H7/14 |
| A | DE-C-321 464 (LEHMANN) <br> * Seite 2, Zeile 8 - Zeile 14; Abbildungen 1,5 * <br> --- | 1 | |
| A | DE-C-505 199 (PEISELER) <br> --- | | |
| A | DE-C-460 335 (PEISELER) <br> ----- | | |

RECHERCHIERTE SACHGEBIETE (Int.Cl.6)

B23D
B21H

Der vorliegende Recherchenbericht wurde für alle Patentansprüche erstellt

| Recherchenort | Abschlußdatum der Recherche | Prüfer |
|---|---|---|
| DEN HAAG | 25. August 1995 | Bogaert, F |